Europäisches Patentamt

(19) European Patent Office

Office européen des brevets

(11) Numéro de publication: **0 031 748**
**B2**

(12) ## NOUVEAU FASCICULE DE BREVET EUROPEEN

(45) Date de publication du nouveau fascicule du brevet: 18.01.89

(21) Numéro de dépôt: **80401772.1**

(22) Date de dépôt: **10.12.80**

(51) Int. Cl.⁴: **G 01 N 3/36**

(54) Procédé et dispositif d'essais pour jante de roues de véhicules.

(30) Priorité: **19.12.79 FR 7931093**

(43) Date de publication de la demande:
**08.07.81 Bulletin 81/27**

(45) Mention de la délivrance du brevet:
**11.04.84 Bulletin 84/15**

(45) Mention de la décision concernant l'opposition:
**18.01.89 Bulletin 89/3**

(84) Etats contractants désignés:
**DE FR GB IT**

(56) Documents cités:
**DE-A- 2 244 630**
**DE-A- 2 827 728**
**DE-B- 2 854 803**
**US-A- 3 559 468**

**DIE FESTIGKEITSPRÜFUNG VON SCHEIBENRÄDERN**
par G. HIMMLER, Tirage à part, pages 1-4, extrait de la
revue: "WERKSTATT UND BETRIEB", vol. 65, no. 3,
pages 149-151, publiée en 1975

(73) Titulaire: **MESSIER-HISPANO-BUGATTI (S.A), 5, rue
Louis Lejeune, F-92120 Montrouge (FR)**

(72) Inventeur: **Papay, Roger, 5, rue Charles Peguy,
F-92340 Bourg la Reine (FR)**

(74) Mandataire: **Chevallier, Robert Marie Georges, Cabinet
BOETTCHER 23, rue La Boétie, F-75008 Paris (FR)**

### Description

La présente invention concerne un procédé et dispositif d'essais pour mettre au point les jantes de roues de véhicules, notamment pour aéronefs.

On connaît des dispositifs d'essais dans lesquels un volant de grand diamètre est entraîné en rotation par son moyeu à l'aide d'un moteur électrique, et contre lequel vient s'appliquer une roue de véhicule, par exemple munie de son pneumatique, sur laquelle on exerce des forces radiale et latérale par rapport à l'axe central du volant. Des jauges de contraintes sont réparties sur la roue, et lorsque celle-ci est appliquée sur le volant, entraîné en rotation, les contraintes que subit la roue sont données par les jauges qui les transmettent aux appareils de contrôle disposés sur une console d'analyse des résultats.

Ce type de dispositif présente des inconvénients dont l'un des plus importants est la durée de réalisation des essais complets d'un type de roues; dans le cas où l'on veut effectuer, par exemple sur une roue d'avion, environ 10 000 km d'essais, il faudra, dans le meilleur des cas, au moins 20 semaines pour réaliser ces essais, la vitesse de rotation du volant ne variant que de 3 à 10 km/h. A cela s'ajoute, une usure de pneumatiques, donc un changement de ces derniers d'environ 25 fois, et par conséquent, une perte de temps importante pour les remplacer (plus de 200 heures pour environ 25 pneus), à cause des phénomènes de frottement et d'échauffement de la gomme et des toiles du pneumatique.

De plus, un inconvénient supplémentaire et important de ce type de dispositif est l'encombrement proprement-dit; en effet, le volant mesure plusieurs mètres de diamètre, ce qui nécessite bien évidemment une installation en conséquence; de même, pour entraîner ce volant, il faut utiliser un moteur électrique d'une puissance considérable. On connaît aussi, notamment par le brevet américain US-A 3 559 468 une machine pour essayer les jantes de roues, notamment en appliquant en certains points spécifiques de ces jantes des forces transmises par des patins venant coopérer contre les jantes selon le préambule de la revendication 2.

Mais, conformément à ce brevet américain, des forces sont appliquées parallèlement à l'axe géométrique de la jante, sur les faces intérieures des rebords contre lesquelles s'appuient les talons du pneumatique, de sorte que l'essai reproduit principalement l'effet d'écartement des rebords de la jante sous l'action de la chambre pneumatique gonflée mais ne reproduit pas les vrais efforts que subit une jante pendant son utilisation.

On connaît aussi par le document DE-A 2 244 630 un appareil d'essai des jantes de véhicules automobiles selon lequel la jante essayée est solidement fixée à une plaque de base massive par l'intermédiaire d'un organe central qui s'étend radialement sous la périphérie de la jante pour porter des enroulements de fil électrique à noyau magnétique espacés en sens circonférentiel. A chacun de ces enroulements est associé une armature mobile susceptible d'être attirée ou non, magnétiquement en concordance avec la tension du courant alternatif qui alimente les enroulements.

Mais les armatures mobiles sont fixées solidement à la face inférieure d'un disque rigide sur lequel repose la jante par un de ses rebords périphériques. En outre une couronne circulaire s'appuie par dessus sur ce rebord et l'applique fermement contre le disque rigide sous l'effet de plusieurs goujons de serrage répartis circulairement. En variante, dans ce même document, un autre disque rigide est posé sur le rebord opposé de la jante et ce disque est réuni fermement au premier disque par plusieurs goujons répartis circulairement. De cette façon le rebord concerné ou les deux rebords de la jante sont solidement contenus sur tout leur développement circulaire dans un montage composé d'un disque rigide et d'une couronne ou de deux disques rigides. Par conséquent, toute force exercée par l'attraction magnétique d'une armature est reportée par l'intermédiaire de ce montage rigide sur la totalité du développement circulaire du rebord concerné ou des deux rebords. En outre, les forces dues à l'attraction magnétique des armatures sont essentiellement parallèles à l'axe de la jante. Les véritables efforts que subit une jante en cours d'utilisation ne sont pas reproduits par l'appareil d'essai de ce document.

Par la présente invention, on se propose de remédier aux divers inconvénients mentionnés plus haut en concevant pour cela un dispositif d'essais pour jantes de roues de véhicules, qui soit à la fois d'un encombrement très réduit par rapport aux dispositifs connus, qui ne consomme pas de pneumatique, et avec lequel la durée des essais soit considérablement réduite.

Plus précisément, la présente invention a pour objet un procédé pour essayer des jantes de roues de véhicule destinées à recevoir un pneumatique à talons, ce procédé étant caractérisé par la combinaison des opérations suivantes:

a) on maintient le moyeu de la jante immobilisé en sens axial et radial, à l'aide d'une fusée rigide sur laquelle ce moyeu est monté, sans immobiliser les deux rebords de cette jante,

b) on applique directement sur les deux rebords de la jante un ensemble tournant de forces individuelles divergentes, orientées vers l'axe de cette jante, analogues aux forces transmises par les talons du pneumatique pendant le roulage du véhicule, en des zones distinctes successives dans le sens circonférentiel de la jante.

c) on choisit l'amplitude desdites forces pour qu'elles soient représentatives d'un spectre des forces que subit réellement une telle jante quand roule le véhicule sur lequel elle est montée, et qui a été préalablement recueilli sur une roue en service.

La présente invention a aussi pour objet un dispositif d'essais pour jantes de roue ayant un moyeu ou équivalent et une jante proprement dite à rebords apte à recevoir un pneumatique à talons comprenant des moyens de positionnement et de maintien fixe de ladite jante, des moyens pour appliquer des efforts sur ladite jante, qui comprennent, d'une part un ensemble de vérins commandables dont les têtes sont aptes à coopérer avec la partie de la jante devant recevoir le talon de pneumatique, lesdites verins étant répartis tout autour de ladite jante de façon sensiblement uniforme caractérisé en ce que les moyens de positionnement et de maintien fixe de ladite jante comprennent une fusée pour le montage dudit moyeu et lesdits moyens pour appliquer des efforts sur ladite jante comprenant un ensemble de supports répartis circulairement autour de la roue et munis chacun de deux vérins positionnés l'un au-dessus de l'autre de manière divergente, les vérins supérieurs étant aptes à appliquer des efforts sur la face extérieure par rapport au moyeu du rebord supérieur de la jante et les vérins inférieurs étant aptes à appliquer des efforts sur la face extérieure par rapport au moyeu du rebord inférieur de la jante, ces efforts étant orientés vers l'axe de ladite jante, et comprenant aussi un organe de commande pour activer successivement lesdits vérins suivant un cycle prédéterminé.

Il est précisé ici en liaison avec ce qui précède que les mots «inférieur» et «supérieur» s'entendent pour une jante dont l'axe géométrique est vertical comme représenté sur les dessins annexés. Ces derniers servent à mieux faire comprendre l'invention à l'aide d'un exemple particulier de réalisation qui sera décrit maintenant, à titre non limitatif, en référence auxdits dessins dans lesquels:

la fig. 1 représente une demi coupe contiguë à une demi vue du dispositif d'essais,
la fig. 2 représente le montage d'un vérin entre son support et la roue, suivant la section I–I de la fig. 1,
la fig. 3 représente schématiquement une installation permettant de réaliser la simulation au moyen du dispositif selon les fig. 1 et 2 et,
la fig. 4 représente un diagramme donnant la courbe de contrainte sur la périphérie d'une roue quand elle est en contact avec le sol, courbe permettant de bien comprendre le fonctionnement du dispositif selon les fig. 1 à 3.

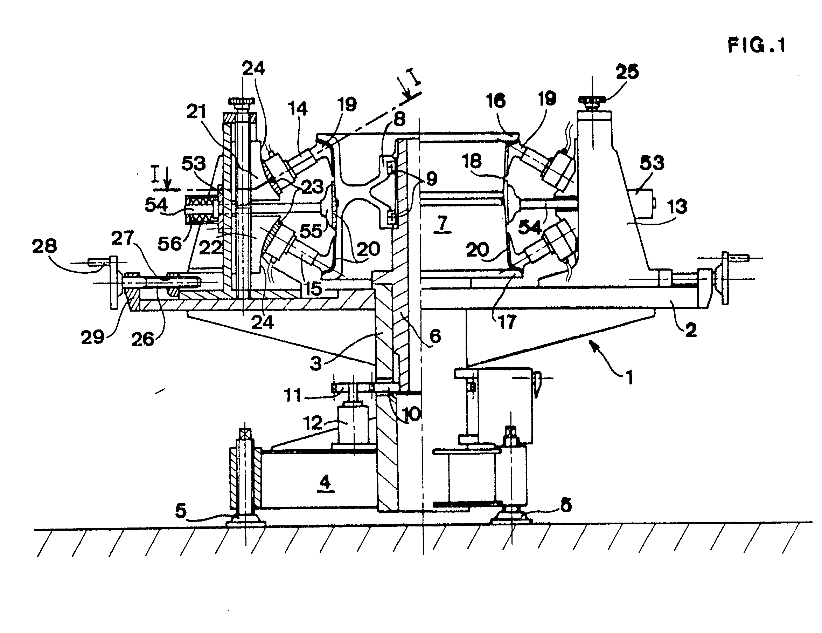

En référence à la fig. 1, le dispositif d'essais pour jantes de roues de véhicule comprend un bâti 1 constitué d'une table 2, au centre de laquelle se trouve une colonne 3 munie à sa base d'un socle 4, lequel est supporté par des pieds réglables 5. A l'intérieur de la colonne 3, est positionnée une fusée 6 portant à son extrémité supérieure une roue 7 montée par son moyeu 8 sur des roulements 9; l'extrémité inférieure de la fusée 6 porte un premier engrenage 10 entraîné en rotation par l'intermédiaire d'un second engrenage 11 monté sur un moteur électrique 12. Ce dispositif permet à la fusée 6 d'être animée d'un mouvement de rotation de manière à effectuer des essais mécaniques, plus particulièrement de fatigue sur les bagues intérieures des roulements 9, et de flexion de la fusée 6.

Autour de la roue 7, des supports 13 sont disposés à intervalles angulaires réguliers, et sont munis, chacun, de deux vérins 14 et 15, positionnés l'un en-dessous de l'autre, et de manière divergente, par rapport aux supports 13 de façon à ce que les vérins supérieurs 14 appliquent des efforts sur la face extérieure, par rapport au moyeu 8, du rebord supérieur 16 de la jante 18, et en ce que les vérins inférieurs 15 appliquent des efforts sur la face extérieure, par rapport au moyeu 8, du rebord inférieur 17 de cette même jante 18.

A titre d'exemple, pour des roues d'aéronefs de l'époque actuelle, on peut concevoir de disposer, environ une vingtaine de supports 13 (avec ces deux vérins), tout autour d'une roue d'un diamètre d'environ 0,60 m.

Les extrémités tournées vers la roue 7 de chacun des vérins supérieur et inférieur 14 et 15 des supports 13 sont munies d'un sabot flexible 19 de rigidité variable sur lequel est fixé un matelas de répartition, réalisé sous la forme d'une bande de caoutchouc 20 épousant la forme des rebords 16 et 17 de la jante 18; cet ensemble sabot 19 et matelas de répartition 20 épousant exactement la forme des talons du pneumatique, l'utilisation de ce dernier n'est donc plus utile dans ce type de dispositif. Chaque support 13 est relié à ces deux vérins 14 et 15 par l'intermédiaire de deux patins 21 et 22 montés coulissants dans le support 13, et positionnés l'un en-dessous de l'autre; chacun de ces patins 21 et 22 étant relié à son vérin respectif par une semelle rigide 23 réglable en position sur une face concave 24 présentée par chaque patin, les patins étant disposés de façon à ce que leurs faces concaves 24 soient dos-à-dos, de manière à autoriser un réglage angulaire des vérins 14 et 15 vis-à-vis de la roue 7. Les patins 21 et 22 de chaque support 13 se règlent verticalement, ou longitudinalement, par rapport à l'axe de la roue, au moyen d'une vis 25 se logeant dans un trou taraudé pratiqué sur toute la longueur des deux patins, et présentant deux pas de vis inversés de manière à ce que la manipulation de la vis 25, dans un sens ou dans l'autre, écarte ou rapproche les patins 21 et 22 l'un par rapport à l'autre.

De même, il est possible d'effectuer un réglage radial de chacun des supports 13, par rapport à l'axe de la roue 7; en effet, il est prévu une tige filetée 26 se logeant dans un trou taraudé 27 appartenant aux supports 13, et munie à son autre extrémité d'une manivelle 28, la partie non filetée de la tige 26 étant maintenue dans un rebord latéral 29, fixé sur la table 2, et faisant office de palier.

De plus, il est monté, sur chaque support 13, un boîtier 53 à l'intérieur duquel est maintenue une extrémité d'un arbre 54, retenue en translation par un épaulement radial externe. Sur l'autre extrémité de chaque arbre 54, est fixé un sabot 55 à rigidité variable, muni d'une bande de caoutchouc 20, appliquant un effort sur la partie centrale de la jante 18 au moyen d'éléments élastiques telles que des rondelles de type «Belleville» 56 montées dans le boîtier 53 autour de l'arbre 54.

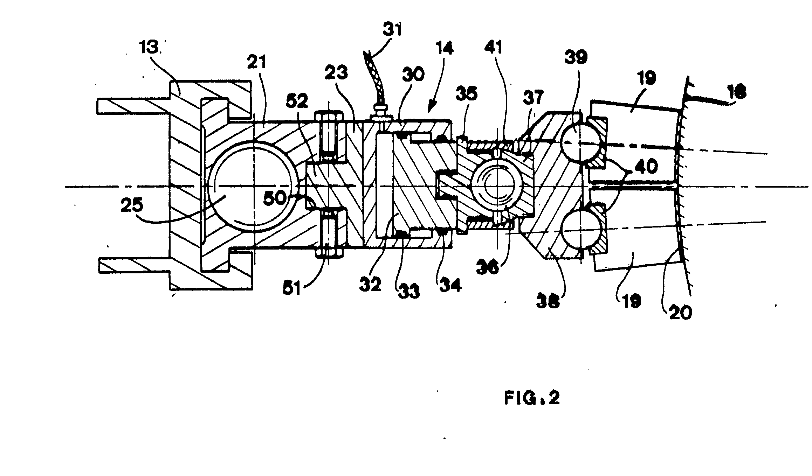

Sur la fig. 2, se retrouvent certains des éléments précédemment décrits, comme le support 13, présentant une glissière dans laquelle coulissent les patins 21 et 22 (le patin 21 étant seul visible) traversés par la vis de réglage 25, assurant le déplacement dos-à-dos des deux patins 21 et 22, qui présentent sur leur face concave, une rainure 50 de profondeur constante, dans laquelle est immobilisée, par des moyens connus, telles que des vis de pression à téton 51 dont les extrémités des tétons maintiennent la partie centrale 52, montée coulissante dans cette rainure, d'une semelle 23 permettant d'obtenir le réglage angulaire de la position du vérin 14, dont le cylindre 30 se rattache à cette semelle 23 par des moyens de fixation non représentés.

Le cylindre 30 est alimenté en pression hydraulique au moyen d'un flexible 31; à l'intérieur du cylindre 30 est monté avec étanchéité un piston 32 équipé de deux joints 33 et 34.

Lorsque le cylindre 30 est alimenté en pression, l'effort du piston 32 est transmis aux sabots 19 au moyen d'un embout 35, accouplé par une de ses extrémités en bout du piston 32 et appliquant par son extrémité opposée de forme concave, une bille principale 36 contre une cuvette 37, également de forme concave, portée sur une face d'un palier 38 dont la face opposée applique contre les sabots 19 deux billes secondaires 39 maintenues chacune dans ces dernières au moyen de cales 40 ayant une face concave pour accueillir les billes, l'embout 35 et la cuvette 37 étant maintenus serrés contre la bille principale 36 au moyen d'une bague filetée 41.

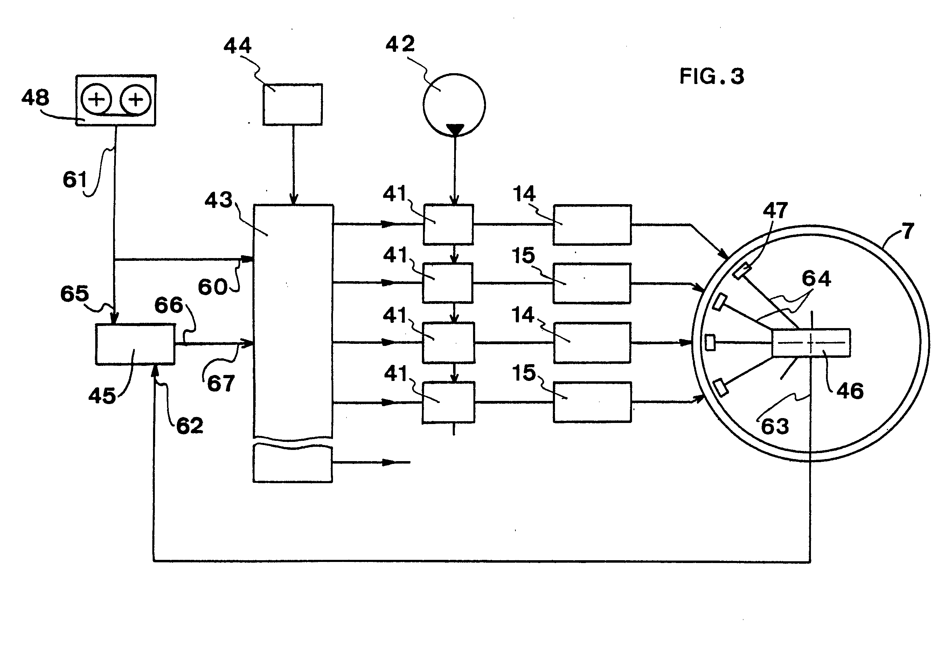

Ce dispositif, comme représenté schématiquement sur la fig. 3, comprend, en plus des vérins supérieur et inférieur 14 et 156, des servo-valves 41 en nombre égal aux vérins et commandant ceux-ci. Ces servo-valves 41 sont alimentées par une pompe hydraulique 42 et sont commandées par un distributeur 43. Ce dernier est synchronisé en recevant des impulsions électriques d'un générateur d'impulsions du type horloge 44. L'entrée de commande 60 du distributeur 43 est reliée à la sortie 61 d'une mémoire 48 dans laquelle a été introduit un ensemble d'informations représentatif d'un spectre des contraintes que subit réellement une roue, notamment d'aéronef, quand ce dernier atterrit et roule sur le sol.

Ce dispositif est plus particulièrement destiné à tester les roues d'aéronefs pour leur mise au point.

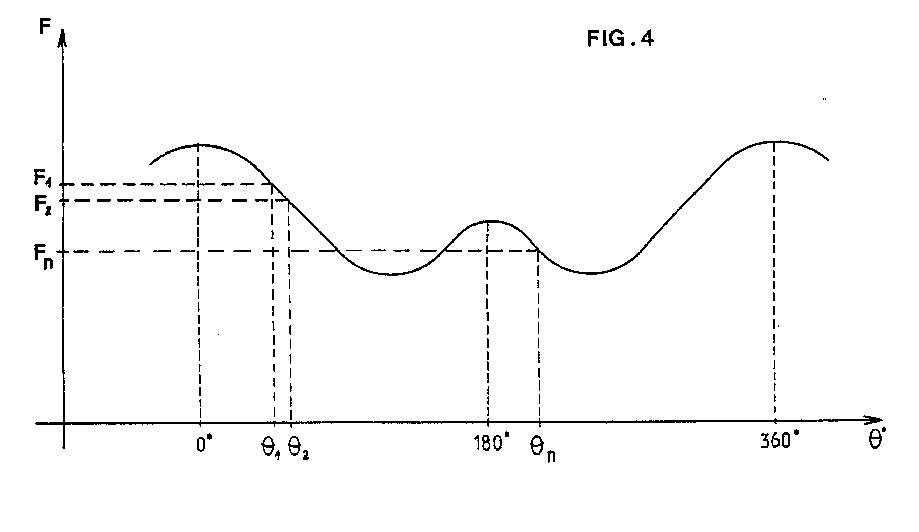

L'utilisation de ce dispositif décrit ci-dessus permet de réduire considérablement la durée des essais tout en augmentant les informations sur le comportement des roues qui seront alors mises au point très rapidement et surtout avec plus de sécurité. Une idée de la forme de ce spectre est donnée sur la fig. 4 qui représente la courbe donnant les valeurs des contraintes F (en unité arbitraire) tout autour de la roue, c'est-à-dire sur sa périphérie complète (sur 360°).

De plus, ce dispositif comprend un comparateur 45 qui reçoit sur un premier ensemble d'entrées 62 des informations en provenance de la sortie 63 d'un transmetteur 46 recevant sur ses entrées 64 des signaux émis par des jauges de contraintes 47 réparties tout autour de la roue 7 et permettant de déterminer les contraintes réellement appliquées sur la roue par les ensembles de vérins 14, 15.

Le comparateur 45 reçoit de plus, sur un second ensemble d'entrées 65, les mêmes informations que celles délivrées à la sortie 61 de la mémoire 48.

Enfin, la sortie 66 du comparateur 45 est reliée à une deuxième entrée de commande 67 du distributeur 43.

Le dispositif d'essais pour jantes de roues de véhicules décrit ci-dessus en regard des fig. 1 à 4 fonctionne de la façon suivante. Le montage de la roue 7 sur sa fusée 6, et les positions et réglages des vérins étant effectués, la pompe hydraulique 42 et le générateur d'impulsions du type horloge 44 sont mis en marche, ce qui a pour conséquence d'alimenter respectivement le distributeur 43 en impulsions électriques et les servo-valves 41 en fluide hydraulique sous pression. Ces dernières sont pilotées par la mémoire 48 et le distributeur 43, et transmettent ainsi aux vérins 14 et 15 un ordre de commande hydraulique de cinq cycles par seconde. De ce fait, les rebords inférieurs et supérieures 16 et 17 de la jante 18 vont subir des contraintes qui seront similaires à celles reçues lors du roulage de l'aéronef sur le sol et transmisses par les talons du pneumatique. La pluralité de vérins 14 et 15 répartis régulièrement autour de la roue 7 sont commandés de façon que chaque couple de vérins 14 et 15, situés l'un en-dessous de l'autre, applique une force égale à celle qu'enregistre une roue lorsqu'elle roule sur le sol; de ce fait, les contraintes que la roue 7 subit en étant en position statique sont équivalentes à celles que subit réellement une roue identique en étant en position dynamique, c'est-à-dire roulant. C'est ainsi que, par exemple, à un instant $t_1$, un premier couple de vérins 14 et 15 applique un effort $F_1$ (fig. 4) pour une position angulaire $\theta_1$ de la circonférence de la roue; un second couple de vérins 14 et 15 disposé à côté du premier applique un effort $F_2$ pour une position angulaire $\theta_2$, un $n^{ième}$ couple de vérins appliquera une force $F_N$ pour une position angulaire $\theta_n$.

A un instant $t_2$ le plus proche de $t_1$, les forces $F_1$, $F_2 \ldots F_N$ qui étaient appliquées respectivement sur les couples 1, 2, ... n de vérins, sont transférées au couple de vérins suivant de cette façon, les forces $F_1$, $F_2 \ldots F_N$ sont appliquées respectivement par les couples de vérins 2, 3 ... n + 1 et ainsi successivement pour simuler en statique une rotation de la jante tout en la laissant immobile. On obtient donc ici une équivalence d'un ensemble de forces tournantes dont la valeur de leur amplitude est représentative du spectre mentionné ci-avant. En conséquence, le dispositif selon l'invention reproduit de façon équivalente sur la roue 7 fixe les efforts qu'une roue montée sur un aéronef reçoit lorsqu'elle se déplace sur une piste.

Ces jauges 47 enregistrent ainsi les contraintes subies par la roue, lesquelles sont ensuite analysées dans le comparateur 45, de manière à corriger éventuellement les signaux émis par le distributeur 43 à la suite de la comparaison entre le spectre dispositif des contraintes établi dans le transmetteur 46 et provenant de la roue 7, et le spectre réel des contraintes enregistré sur bandes magnétiques dans la mémoire 48, et préalablement recueilli sur une roue en service.

En effet, il se peut que la valeur de l'effort d'un vérin ne corresponde pas à la valeur programmée dans la mémoire représentant le spectre réel des contraintes.

Cette erreur sera donc relevée puis rectifiée respectivement par le comparateur et le distributeur.

Cette erreur peut provenir d'une perte ou fuite des circuits électronique ou hydraulique.

En effet, si par exemple un vérin n'est pas suffisamment alimenté, il produit une force qui est inférieure à celle qui devrait être appliquée sur la jante. La jauge ou les jauges 47 correspondantes vont détecter ce manque et alors produire un signal via le transmetteur 46 pour avertir de ce défaut le comparateur 45 sur ces entrées 62. Comme sur les autres entrées 65 de ce comparateur 45, il reçoit les valeurs vraies de la force qui devrait être appliquée, ce comparateur délivre alors à sa sortie 66 un signal d'erreur (différence entre les deux forces) qui, par l'intermédiaire du distributeur 43 va commander une alimentation plus importante du vérin pour compenser sa perte de puissance. Ce fonctionnement serait alors strictement identique dans le cas d'une surpuissance, le signal d'erreur permettant une diminution de l'alimentation du vérin pour qu'il donne sa vraie puissance.

Bien entendu, quand les jauges 47 détectent des forces de bonne valeur, dans ce cas, le signal d'erreur en sortie du comparateur 45 sera nulle et n'entraînera aucune correction des signaux en provenance de la mémoire 48.

L'ensemble des données qui seront recueillies sur les jauges seront par exemple envoyées dans un ordinateur afin qu'elles puissent être analysées et donner toutes sortes d'informations sur la façon de réaliser, modifier, améliorer les jantes de roue.

Bien entendu, l'ensemble des moyens qui constitue le dispositif est connu en lui-même, mais plus particulièrement la mémoire 48 sera constituée par une bande magnétique qui sera aussi synchronisée par exemple à partir de l'horloge 44 ou de toute autre source de référence.

De plus, le distributeur sera lui constitué par un ensemble, par exemple de bascules en nombre correspondant à celui de l'ensemble de vérins, auxquelles seront associées des amplificateurs commandables par les signaux émis par le comparateur 45.

## Revendications

1. Procédé pour essayer une jante (18) de roue (1) d'un véhicule, destinée à recevoir un pneumatique à talons, caractérisé par la combinaison des opérations suivantes:
a) on maintient le moyeu (8) de la jante immobilisé en sens axial et radial, à l'aide d'une fusée rigide (6) sur laquelle ce moyeu est monté, sans immobiliser les deux rebords de cette jante,
b) on applique directement sur les deux rebords de la jante un ensemble tournant de forces individuelles (14, 15) divergentes, orientées vers l'axe de cette jante, analogues aux forces transmises par les talons du pneumatique pendant le roulage du véhicule, en des zones distinctes successives dans le sens circonférentiel de la jante.
c) on choisit l'amplitude desdites forces pour qu'elles soient représentatives d'un spectre des forces que subit réellement une telle jante quand roule le véhicule sur lequel elle est montée, et qui a été préalablement recueilli sur une roue en service.

2. Dispositif d'essais pour jantes de roue ayant un moyeu (8) ou équivalent et une jante proprement dite à rebords (16, 17) apte à recevoir un pneumatique à talons, comprenant des moyens de positionnement et de maintien fixe de ladite jante, des moyens pour appliquer des efforts sur ladite jante, qui comprennent, d'une part un ensemble de vérins commandables (14, 15) dont les têtes sont aptes à coopérer avec la partie de la jante (18) devant recevoir le talon du pneumatique, lesdits vérins (14, 15) étant répartis tout autour de ladite jante de façon sensiblement uniforme caractérisé en ce que les moyens de positionnement et de maintien fixe de ladite jante comprennent une fusée (6) pour le montage dudit moyeu (8) et lesdits moyens pour appliquer des efforts sur ladite jante comprenant un ensemble de supports (13) répartis circulairement autour de la roue et munis chacun de deux vérins (14, 15) positionnés l'un au-dessus de l'autre de manière divergente, les vérins supérieurs (14) étant aptes à appliquer des efforts sur la face extérieure par rapport au moyeu du rebord supérieur de la jante (18) et les vérins inférieurs (15) étant aptes à appliquer des efforts sur la face extérieure par rapport au moyeu du rebord inférieur de la jante (18) ces efforts étant orientés vers l'axe de ladite jante, et comprenant aussi un organe de commande pour activer successivement lesdits vérins (14, 15) suivant un cycle prédéterminé.

3. Dispositif selon la revendication 2, caractérisé par le fait que ledit organe de commande comprend un distributeur d'ordres (43), une mémoire (48) contenant lesdits ordres dont la sortie (61) est reliée à l'entrée (60) d'alimentation dudit distributeur (43).

4. Dispositif selon la revendication 3, caractérisé par le fait que ledit organe de commande comprend une horloge (44) apte à délivrer des impulsions suivant une fréquence déterminée, dont la sortie est reliée à l'entrée de synchronisation dudit distributeur (43).

5. Dispositif selon l'une des revendications 3 à 4, caractérisé par le fait que lesdits vérins commandables (14, 15) sont constitués par un vérin (14 ou 15), une source de fluide haute pression (42) et une servo-valve (41) reliant la sortie de ladite source aux entrées dudit vérin (14 ou 15), l'entrée de commande de ladite servo-valve (41) étant apte à être connectée à une sortie dudit distributeur (43).

6. Dispositif selon l'une des revendications 2 à 5, caractérisé par le fait qu'il comprend des moyens pour contrôler l'ensemble des forces appliquées sur ladite jante.

7. Dispositif selon l'une des revendications 2 à 6, caractérisé par le fait que lesdits moyens de contrôle comprennent un ensemble de jauges de contraintes (47) coopérant avec le pourtour de ladite jante (18) et des moyens pour corriger les signaux élaborés par les moyens de commande en fonction des signaux délivrés par lesdites jauges (47).

8. Dispositif selon la revendication 7, caractérisé par le fait que lesdits moyens pour corriger les signaux élaborés par les moyens de commande comportent un transmetteur (46) recevant l'ensemble des signaux délivrés par lesdites jauges (47), et un comparateur (45) dont une entrée de comparaison (65) reçoit les signaux délivrés par ladite mémoire (48) et dont l'autre entrée de comparaison (62) est connectée à la sortie (63) du transmetteur (46).

9. Dispositif selon l'une des revendications 2 à 8 précédentes, caractérisé par le fait que l'extrémité des vérins, située du côté de la roue (7) est associée à au moins un sabot flexible de rigidité variable (19), épousant la forme de la face extérieure, par rapport au moyeu (8), du rebord de la jante de la roue.

10. Dispositif selon la revendication précédente, caractérisé par le fait qu'un matelas de répartition (20), réalisé sous forme d'une bande de caoutchouc, recouvre la face des sabots (19) tournée vers la jante (18).

11. Dispositif selon l'une des revendications 2 à 10 précédentes, caractérisé par le fait que sur chaque support (13) sont maintenus deux patins (21, 22), reliés chacun à l'extrémité en regard de l'un des deux vérins (14, 15) dont est muni le support (13) par une semelle (23) réglable en position sur une face concave (24) présentée par chaque patin (21, 22) en regard du vérin, les patins étant disposés l'un vis-à-vis de l'autre de sorte que leurs faces concaves soient dos-à-dos, de manière à autoriser un réglage angulaire des vérins vis-à-vis de la roue (7).

12. Dispositif selon l'une des revendications 2 à 11 précédentes, caractérisé par le fait que les deux patins (21, 22) de chaque support (13) sont montés coulissants et sont positionnés sur ce dernier, par des moyens de réglage longitudinal par rapport à l'axe de la roue, portés par le support.

13. Dispositif selon l'une des revendications 2 à 12 précédentes, caractérisé par le fait qu'un bâti (1) porte des moyens assurant séparément pour chaque support le réglage radial de ces derniers par rapport à l'axe de la roue.

14. Dispositif selon l'une des revendications 2 à 13 précédentes, caractérisé par le fait que des sabots (55) munis de matelas de répartition sont disposés autour de la roue (7) et appliquent des efforts sur la partie centrale de la jante (18) au moyen d'éléments élastiques (56).

15. Dispositif selon l'une des revendications 2 à 14 précédentes, caractérisé par le fait que l'effort du piston (32) du vérin (14, 15) est transmis à ou au(x) sabot(s) (19) associé au moyen d'un embout (35), monté par une de ses extrémités en bout du piston, et appliquant par son autre extrémité, une bille principale (36) dans une cuvette (37), portée sur une face d'un palier (38) dont la face opposée applique contre le ou les sabot(s) associé à un nombre égal de billes secondaires (39).

16. Dispositif selon l'une des revendications 2 à 15 précédentes, caractérisé par le fait que le moyeu (8) de la roue (7) est monté au moyen de roulements (9) sur la fusée (6) située au centre d'une table (2) que comprend le bâti (1) et sur laquelle reposent les supports (13) de vérins (14, 15), l'extrémité de la fusée (6) opposée à celle portant le moyeu de la roue (7) étant relié à des moyens (10, 11, 12) d'entraînement en rotation.

## Claims

1. A method of testing a rim (18) of a vehicle wheel (7) intended to receive a clincher tyre, characterized by the combination of the following operations:
a) the hub (8) of the rim is held stationary in the axial and radial directions by means of a rigid spindle (6) on which the hub is mounted, without preventing the two flanges of said rim from moving;
b) a rotating set of individual diverging forces (14, 15) is directly applied to the two flanges of the rim, said forces being oriented towards the axis of said rim and being analogous to the forces transmitted by the beading of the tyre while the vehicle is running, said forces being applied at successive distinct zones in the circumferential direction of the rim; and
c) the amplitudes of said forces are selected to be representative of a spectrum of forces to which such a rim is actually subjected while the vehicle of which it is mounted is running, said spectrum having been previously picked up from a wheel in operation.

2. Apparatus for testing the rims of a wheel having a hub (8) or equivalent and a rim per se having flanges (16, 17) suitable for receiving a clincher tyre, the apparatus comprising means for positioning said rim and for holding it fixed, means for applying forces to said rim comprising firstly a set of controllable jacks (14, 15) having heads suitable for cooperating with the portion of the rim (18) suitable for receiving the beaded edge of the tyre, said jacks (14, 15) being distributed around said rim in substantially uniform manner, characterized in that the means for positioning said rim and for holding it fixed comprise a spindle (6) for mounting said hub (8), and said means for applying forces to said rim comprise a set of supports (13) spaced apart circularly around the wheel and each provided with two jacks (14, 15) positioned above each other in diverging manner, with the upper jacks (14) being suitable for applying forces on the outer face relative to the hub of the top flange of the rim (18), and the lower jacks (15) being suitable for applying forces on the outer face relative to the hub of the lower flange of the rim (18), said forces being oriented towards the axis of said rim, said means also comprising a control member for successively activating said jacks (14, 15) in a predetermined cycle.

3. Apparatus according to claim 2, characterized by the fact that said control unit includes an order distributer (43), and a memory (48) containing said orders and having an output (61) connected to an input (60) for feeding said distributer (43).

4. Apparatus according to claim 3, characterized by the fact that said control unit includes a clock (44) suitable for delivering pulses at a determined frequency and having an output connected to a synchronizing input of said distributer (43).

5. Apparatus according to claim 3 or 4, characterized by the fact that said controllable jacks (14, 15) are constituted by respective jacks (14 or 15), a source of high pressure fluid (42) and respective servo-valves (41) connecting an output from said source to inputs of said jacks (14 or 15), with the control inputs to said servo-valves being suitable for connection to respective outputs from said distributer (43).

6. Apparatus according to any one of claims 2 to 5, characterized by the fact that it includes means for monitoring the set of forces applied to said rim.

7. Apparatus according to one of claims 2 to 6, characterized by the fact that said monitoring means comprise a set of strain guages (47) cooperating with the periphery of said rim (18) and means for correcting the signals generated by the control means as a function of the signals delivered by said guages (47).

8. Apparatus according to claim 7, characterized by the fact that said means for correcting the signals generated by the control means include a transmitter (46) receiving the set of signals delivered by said guages (47), and a comparator (45) having one comparison input (65) receiving the signals delivered by said memory (48) and having the other comparison input (62) connected to the output (63) from the transmitter (46).

9. Apparatus according to claim according to one of preceding claims 2 to 8, characterized by the fact that the wheel (7) end of each jack is associated with at least one flexible shoe of variable rigidity (19) adapting itself to the shape of the outside face, relative to the hub (8), of the flange on the wheel rim.

10. Apparatus according to the preceding claim, characterized by the fact that a distribution block (20) in the form of a strip of rubber covers the face of the shoes (19) turned towards the rim (18).

11. Apparatus according to any one of preceding claims 2 to 10, characterized by the fact that two skates (21, 22) are held on each support (13), each skate being connected to the facing end of one of the two jacks (14, 15) fitted on the support (13) by means of a sole plate (23) of adjustable position on a concave face (24) present on each skate (21, 22) opposite to the jack, the jacks being disposed opposite each other whereby their concave faces are back to back, to enable the angles of the jacks relative to the wheel (7) to be adjusted.

12. Apparatus according to any one of preceding claims 2 to 11, characterized by the fact that the two skates (21, 22) of each support (13) are slidably mounted and are positioned thereon by adjustment means mounted on the support for adjusting position longitudinally relative to the wheel axis.

13. Apparatus according to any one of preceding claims 2 to 12, characterized by the fact that a frame (1) carries means for separately ensuring radial adjustment of each support relative to the wheel axis.

14. Apparatus according to any one of preceding claims 2 to 13, characterized by the fact that the shoes (55) fitted with the distribution blocks are disposed around the wheel (7) and apply forces on the central portion of the rim (18) by means of resilient members (56).

15. Apparatus according to any one of preceding claims 2 to 14, characterized by the fact that the force of the piston (32) of each jack (14, 15) is transmitted to the associated shoe(s) (19) by means of an end piece (35) having one end mounted on one end of the piston, and having its other end pressing a main ball (36) into a cup (37) which is mounted on one face of a bearing (38) whose opposite face presses against the associated shoe(s) via an equal number of secondary balls (39).

16. Apparatus according to any one of preceding claims 2 to 15, characterized by the fact that the hub (8) of the wheel (7) is mounted by means of a ball or roller bearing (9) on the spindle (6) situated in the middle of a table (2) on the frame (1) and on which the supports (13) of the jacks (14, 15) rest, the end of the spindle (6) opposite to the end carrying the hub of the wheel (7) being connected to rotary drive means (10, 11, 12).

**Patentansprüche**

1. Verfahren zum Prüfen einer Felge (18) eines Rades (1) eines Fahrzeuges, bestimmt zur Aufnahme eines Wulstreifens, gekennzeichnet durch die Kombination der nachfolgenden Arbeitsgänge:
a) man hält die Nabe (8) der Felge in Axialrichtung und die Radialrichtung bewegungsunfähig mit Hilfe einer starren Drehscheibe (6), auf der die Nabe befestigt ist, ohne die zwei Felgenringe dieser Felge festzusetzen,

b) man bringt direkt auf den zwei Felgenringen der Felge eine mitumlaufende Einheit von einzelnen divergierenden Kräften auf, ausgerichtet nach der Achse dieser Felge, entsprechend der durch die Wulstreifen übertragenen Kräfte während des Rollens des Fahrzeuges, in verschiedenen aufeinanderfolgenden Zonen im Umfangssinn der Felge.

c) Man wählt die Amplitude der Kräfte, für die ein Kräftespektrum repräsentativ ist, dem eine solche Felge in Wirklichkeit unterliegt, wenn das Fahrzeug rollt, an dem sie montiert ist, und die voraufgehend an einem Rad in Betrieb aufgenommen wurde.

2. Vorrichtung zum Prüfen von Radfelgen mit einer Nabe (8) oder einem Äquivalent und einer Felge, genauer gesagt mit Felgenringen (16, 17), die zur Aufnahme eines Wulstreifens geeignet sind, umfassend Mittel zum Positionieren und zum feststehenden Halten der Felge, Mittel zum Aufbringen von Beanspruchungen auf die Felge, die einerseits eine Einheit von steuerbaren Zylindern (14, 15) aufweisen, deren Köpfe geeignet sind mit dem Teil der Felge (18), der den Reifenwulst aufnehmen muss, zusammenzuarbeiten, wobei die Zylinder (14, 15) im wesentlichen gleichmässig über den Umfang der Felge verteilt sind, dadurch gekennzeichnet, dass die Mittel zum Positionieren und feststehenden Halten der Felge eine Drehscheibe (6) für die Montage der Nabe (8) umfassen und die Mittel zum Aufbringen von Beanspruchung auf die Felge eine Einheit von Trägern (13) umfassen, kreisförmig verteilt um das Rad herum und jede ausgestattet mit zwei Zylindern (14, 15), wobei der eine über dem anderen in divergierender Weise positioniert ist, und die oberen Zylinder (14) sich zum Aufbringen von Beanspruchungen auf die äussere Vorderseite bezogen auf die Nabe des oben liegenden Felgenringes der Felge (18) eignen und die unteren Zylinder (15) sich zum Aufbringen von Beanspruchungen auf die äussere Vorderseite bezogen auf die Nabe des unten liegenden Felgenringes der Felge (18) eignen, wobei die Beanspruchungen in Richtung der Achse der Felge orientiert sind, und auch ein Steuerorgan umfassen zum aufeinanderfolgenden Aktivieren der Zylinder (14, 15) gemäss einem vorbestimmten Zyklus.

3. Vorrichtung nach Anspruch 2, dadurch gekennzeichnet, dass das Steuerorgan einen Befehlsverteiler (43) und einen Speicher (48), der die Befehle enthält und dessen Ausgang (61) mit dem Versorgungseingang (60) des Verteilers (43) verbunden ist, umfasst.

4. Vorrichtung nach Anspruch 3, dadurch gekennzeichnet, dass das Steuerorgan einen Taktgeber (44) umfasst, der geeignet ist, Impulse einer vorbestimmten Frequenz zu liefern, und dessen Ausgang mit dem Synchronisationseingang des Verteilers (43) verbunden ist.

5. Vorrichtung nach einem der Ansprüche 3 bis 4, dadurch gekennzeichnet, dass die steuerbaren Zylinder (14, 15) von einem Zylinder (14 oder 15), einer Hochdruckfluidquelle (42) und einem Servoventil (41) gebildet werden, das den Ausgang dieser Quelle mit den Eingängen des Zylinders (14 oder 15) verbindet, wobei der Steuereingang des Servoventils (41) geeignet ist, mit einem Ausgang des Verteilers (43) verbunden zu werden.

6. Vorrichtung nach einem der Ansprüche 2 bis 5, dadurch gekennzeichnet, dass sie Mittel zum Steuern der Gesamtheit der auf die Felge aufgebrachten Kräfte umfasst.

7. Vorrichtung nach einem der Ansprüche 2 bis 6, dadurch gekennzeichnet, dass die Mittel zum Steuern eine Gruppe von Dehnungsmessstreifen (47), die mit dem äusseren Umfang der Felge (18) zusammenarbeiten, sowie Mittel zum Korrigieren von Signalen umfassen, die von den Mitteln zum Steuern als Funktion von Signalen, die von den Dehnungsmessstreifen (47) geliefert werden, gewonnen werden.

8. Vorrichtung nach Anspruch 7, dadurch gekennzeichnet, dass die Mittel zum Korrigieren der von den Mitteln zum Steuern gewonnenen Signale einen Übermittler (46), der die Gesamtheit der von den Dehnungsmessstreifen (47) gelieferten Signale empfängt, und einen Komparator (45) umfasst, von dem ein Komparatoreingang (65) die von dem Speicher (48) abgegebenen Signale empfängt und dessen anderer Komparatoreingang (62) mit dem Ausgang (63) des Übermittlers (46) verbunden ist.

9. Vorrichtung nach einem der vorhergehenden Ansprüche 2 bis 8, dadurch gekennzeichnet, dass das Ende der Zylinder benachbart zur Seite des Rades (7) mit wenigstens einem flexiblen Schuh (19) variabler Steifigkeit versehen ist, der die Form der Aussenseite des Randes der Felge des Rades in bezug zur Nabe annimmt.

10. Vorrichtung nach vorhergehendem Anspruch, dadurch gekennzeichnet, dass ein Verteilerkissen (20) in Form eines Kautschukbandes die gegen die Felge (18) gerichtete Fläche der Schuhe (19) bedeckt.

11. Vorrichtung nach einem der vorhergehenden Ansprüche 2 bis 11, dadurch gekennzeichnet, dass auf jedem Träger (13) zwei Füsse (21, 22) gehalten sind, die jeweils mit einem Ende einer der beiden Zylinder (14, 15), mit dem der Träger (13) versehen ist, über ein Fussteil (23) verbunden sind, das in seiner Position auf einer konkaven Fläche (24), die von jedem Fuss (21, 22) zum Zylinder gerichtet ist, einstellbar ist, wobei die Füsse derart einander gegenüberliegend angeordnet sind, dass ihre konkaven Flächen sich Rücken an Rücken befinden derart, dass eine Winkeleinstellung der Zylinder gegenüber dem Rad (7) zugelassen wird.

12. Vorrichtung nach einem der vorhergehenden Ansprüche 2 bis 11, dadurch gekennzeichnet, dass die beiden Füsse (21, 22) jedes Trägers (13) verschiebbar montiert und auf dem letzteren durch Mittel zur Längseinstellung in bezug zur Achse des Rades, die von dem Träger getragen werden, positioniert sind.

13. Vorrichtung nach einem der vorhergehenden Ansprüche 2 bis 12, dadurch gekennzeichnet, dass das Gestell (1) Mittel trägt, die getrennt für jeden Träger die Radialeinstellung der letzteren in bezug zur Radachse sicherstellen.

14. Vorrichtung nach einem der vorhergehenden Ansprüche 2 bis 13, dadurch gekennzeichnet, dass Schuhe (55), die mit Verteilerkissen versehen sind, um das Rad (7) herum angeordnet sind und Beanspruchungen im mittleren Teil der Nabe (18) über elastische Elemente (56) bewirken.

15. Vorrichtung nach einem der vorhergehenden Ansprüche 2 bis 14, dadurch gekennzeichnet, dass die Last der Kolben (32) der Zylinder (14, 15) auf den oder die Schuhe (19) übertragen wird, die mit einem Übergangsstück (35) damit verbunden sind, das mit einem seiner Enden am vorderen Ende des Kolbens montiert ist und mit seinem anderen Ende eine Hauptkugel (36) in einer Schale (37) beaufschlagt, die auf einer Seite eines Lagers (38) getragen wird, dessen gegenüberliegende Seite gegen den oder die Schuhe gerichtet und mit einer geraden Anzahl von sekundären Kugeln (39) versehen ist.

16. Vorrichtung nach einem der vorhergehenden Ansprüche 2 bis 15, dadurch gekennzeichnet, dass die Nabe (8) des Rades (7) mittels Rollen (9) auf einer Spindel (6) montiert ist, die in der Mitte eines Tisches (2) angeordnet ist, der das Gestell (1) umfasst und auf dem die Träger (13) der Zylinder (14, 15) ruhen, wobei das Ende der Spindel (6), das demjenigen gegenüberliegt, das die Nabe des Rades (7) trägt, mit Mitteln (10, 11, 12) zum Drehantrieb verbunden ist.

**FIG.1**

FIG. 2

FIG.3

FIG. 4

EP 0 031 748 B2